# EUROPEAN PATENT APPLICATION

(11) **EP 4 793 653 A1**
(43) Date of publication of application: **19.08.2026**
(21) Application number: 24877586.8
(22) Date of filing: 14.10.2024
(51) Int. Cl.: G01S 5/02

(54) **METHOD FOR MEASURING POSITION AND DEVICE THEREFOR IN WIRELESS COMMUNICATION SYSTEM**

(30) Priority: 12.10.2023 KR 20230136076
(71) Applicant: LG Electronics Inc., Seoul 07336 (KR)
(72) Inventor: HWANG, Jaeho, Seoul 06772 (KR); SEO, Hanbyul, Seoul 06772 (KR)
(74) Representative: Plasseraud IP
(86) International application number: PCT/KR2024/015534
(87) International publication number: WO 2025/080051

(57) **Abstract**

Disclosed according to various embodiments are a method by which a terminal measures a position and a device therefor in a wireless communication system. Disclosed are a method and a device therefor, the method comprising the steps of: receiving, from a first anchor and a second anchor, a first signal and second signal transmitted at a first time; receiving, from a third anchor and a fourth anchor, a third signal and fourth signal transmitted at a second time; and calculating at least two reception time differences for measuring the position of a terminal on the basis of the first to fourth signals.

## Description

### TECHNICAL FIELD

The present disclosure relates to a method of measuring a position by a user equipment (UE) in a wireless communication system and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

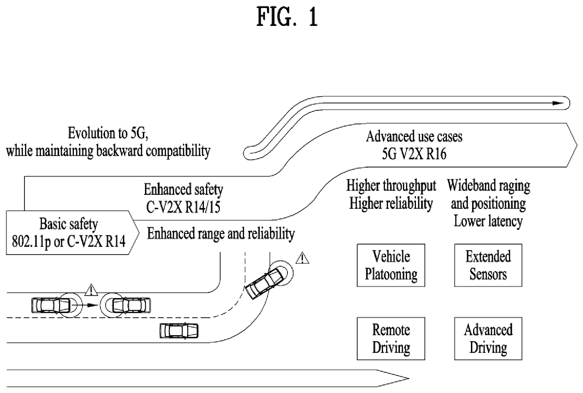

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### Technical Problem

The object of the present disclosure is to provide a method of accurately and efficiently measuring the position of a user equipment (UE) in a wireless communication system and an apparatus for the same.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### Technical Solution

In an aspect of the present disclosure, a method performed by a UE for measuring a position in a wireless communication system is provided. The method includes: receiving a first signal and a second signal transmitted at a first time from a first anchor and a second anchor; receiving a third signal and a fourth signal transmitted at a second time from a third anchor and a fourth anchor; and calculating at least two reception time differences for position measurement of the UE based on the first signal to the fourth signal. The third anchor and the fourth anchor may be virtual anchors obtained by shifting positions of the first anchor and the second anchor by an amount of position change of the UE measured during a time interval between the first time and the second time.

Alternatively, the UE may select at least three anchors based on a channel state of each of the first anchor, the second anchor, the third anchor, and the fourth anchor or whether each of the first anchor, the second anchor, the third anchor, and the fourth anchor is located in a line-of-sight (LOS) environment. The at least two reception time differences may be calculated based on signals corresponding to the at least three anchors.

Alternatively, each of a reception time of the third signal and a reception time of the fourth signal may be corrected based on the time interval. The at least two reception time differences may be calculated based on a reception time of the first signal, a reception time of the second signal, the corrected reception time of the third signal, and the corrected reception time of the fourth signal.

Alternatively, based on synchronization error between the first anchor and the second anchor being greater than or equal to a predetermined error threshold, a position of the UE may be calculated based only on a reception time difference between the first anchor and the third anchor corresponding to the first anchor and a reception time difference between the second anchor and the fourth anchor corresponding to the second anchor.

Alternatively, the UE may calculate a plurality of reception time differences based on the first signal to the fourth signal. The at least two reception time differences may be selected from among the plurality of reception time differences based on a channel state of each of the first anchor, the second anchor, the third anchor, and the fourth anchor or whether each of the first anchor, the second anchor, the third anchor, and the fourth anchor is located in a LOS environment.

Alternatively, the first anchor and the second anchor may be two anchors selected from among a plurality of anchors based on a channel state at the first time and a LOS (line-of-sight) environment.

Alternatively, the method further includes reporting information on the amount of position change to the first anchor or the second anchor for changing a transmission period of the first signal and the second signal.

Alternatively, the amount of position change may be calculated based on an inertial measurement unit (IMU) sensor.

In another aspect of the present disclosure, a computer-readable recording medium storing a program for performing the above-described method for measuring a position is provided.

In another aspect of the present disclosure, a UE configured to perform the above-described method for measuring a position may be provided.

In another aspect of the present disclosure, a processing apparatus configured to control a UE performing the above-described method for measuring a position may be provided.

In another aspect of the present disclosure, a method of measuring a position of a UE by an anchor in a wireless communication system is provided. The method includes: measuring, at a first anchor, first reception time information for a first UE signal of the UE transmitted at a first time and a second UE signal of the UE transmitted at a second time; receiving, from the first UE, information on an amount of position change between the first time and the second time; receiving, from a second anchor, second reception time information measured at the second anchor for the first UE signal and the second UE signal; and measuring a position of the UE based on the amount of position change, the first reception time information, and the second reception time information.

In another aspect of the present disclosure, a computer-readable recording medium storing a program for performing the above-described method of measuring a position of a UE is provided.

In another aspect of the present disclosure, a first anchor configured to perform the above-described method of measuring a position of a UE is provided.

In a further aspect of the present disclosure, a processing apparatus configured to control a first anchor performing the above-described method of measuring a position of a UE is provided.

### Advantageous Effects

According to an embodiment, the position of a user equipment (UE) may be accurately and efficiently measured in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating an observed time difference of arrival (OTDOA) positioning method, to which the embodiment is applicable.
FIGS. 17 and 18 are diagrams for explaining a positioning method.
FIGS. 19 and 20 are diagrams for explaining a method in which a UE calculates reception time differences based on two anchors.
FIG. 21 is a block diagram for explaining a configuration of a UE for performing position measurement.
FIGS. 22 and 23 are diagrams for explaining a method in which a UE calculates a position based on TDoA.
FIGS. 24 to 27 are diagrams for explaining a method in which a UE selects two anchors from among two or more anchors and measures a position.
FIGS. 28 and 29 are diagrams for explaining a method in which a UE transmits additional information to an anchor to improve positioning performance.
FIG. 30 is a diagram for explaining a method in which a UE measures a position using anchors.
FIG. 31 is a diagram for explaining a method in which a first anchor measures a position of a UE.
FIG. 32 illustrates a communication system applied to the present disclosure.
FIG. 33 illustrates wireless devices applicable to the present disclosure.
FIG. 34 illustrates another example of a wireless device to which the present disclosure is applied.
FIG. 35 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

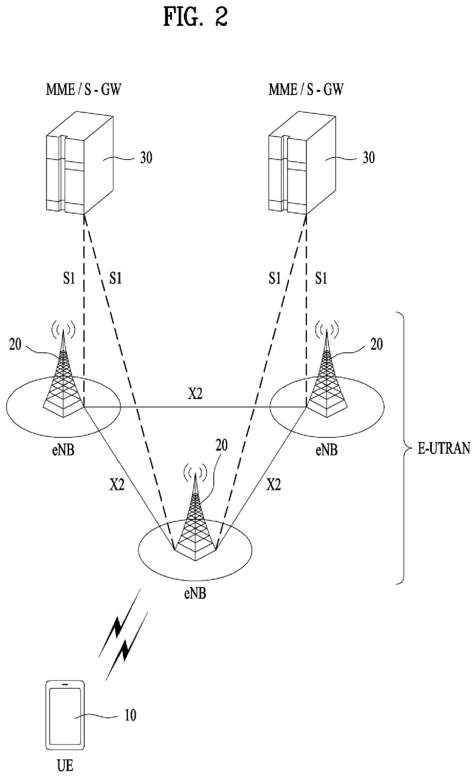

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

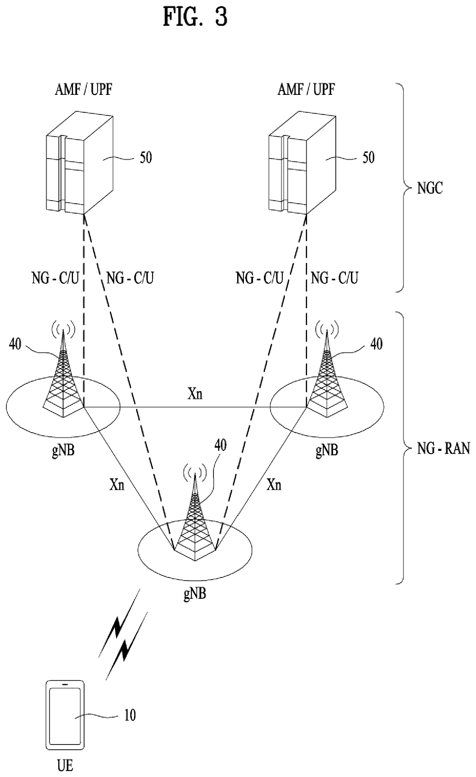

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

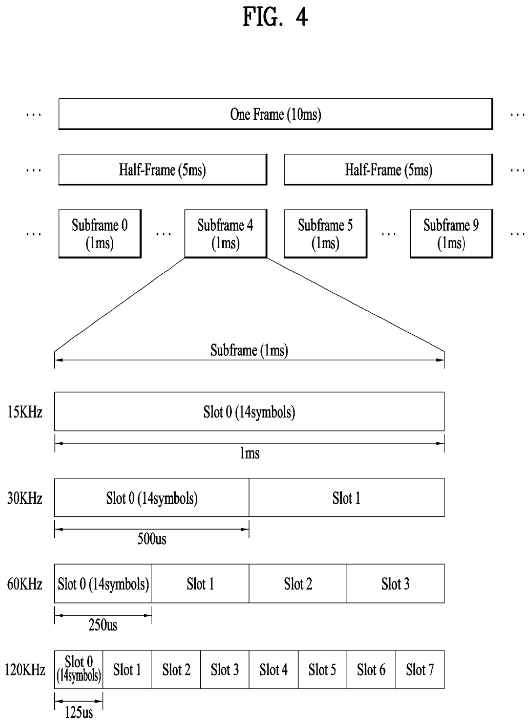

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

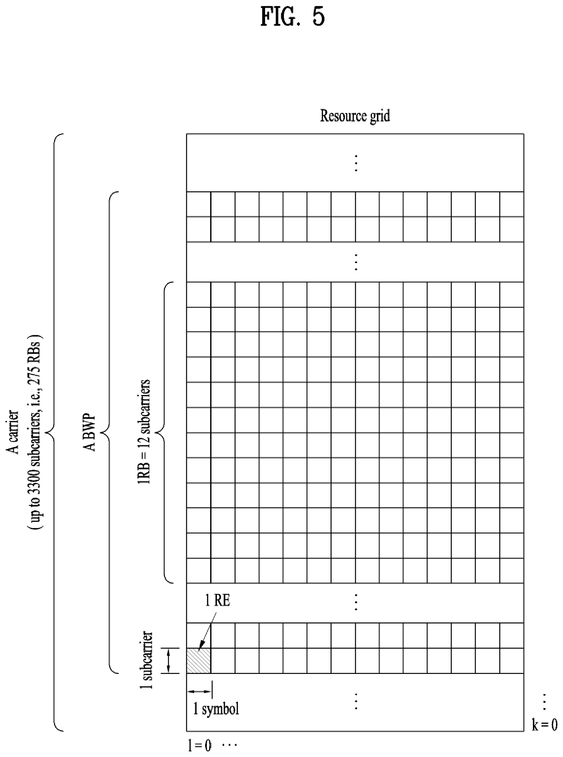

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

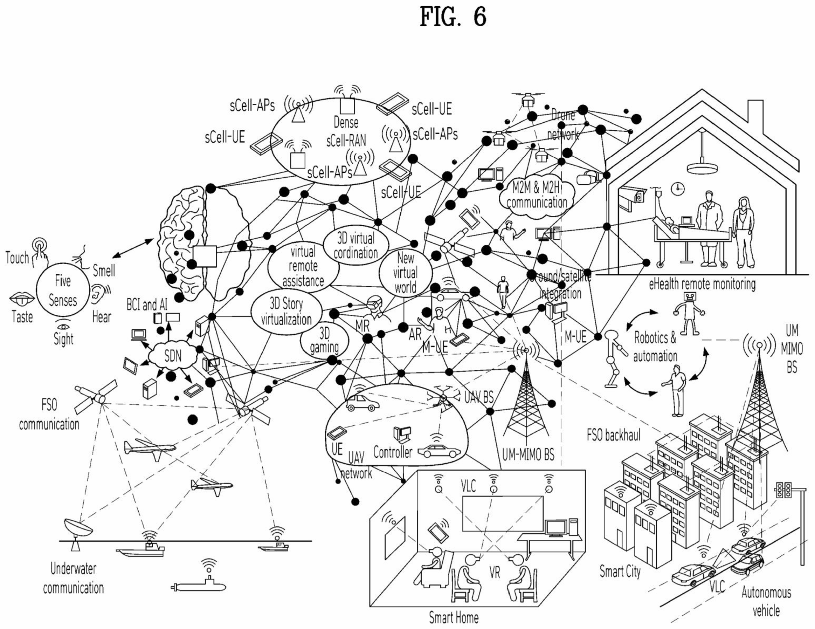

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

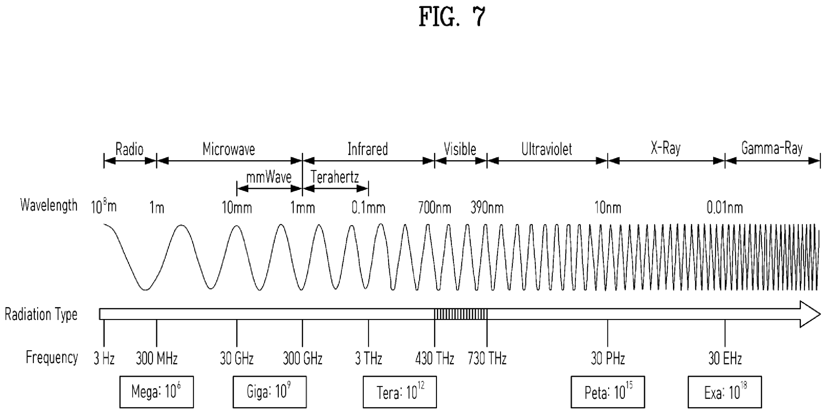

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

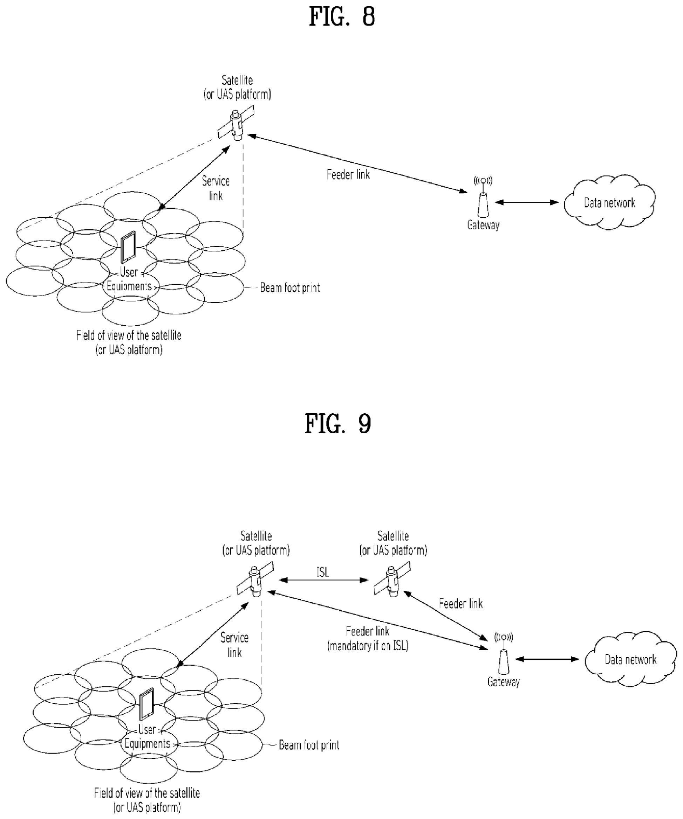

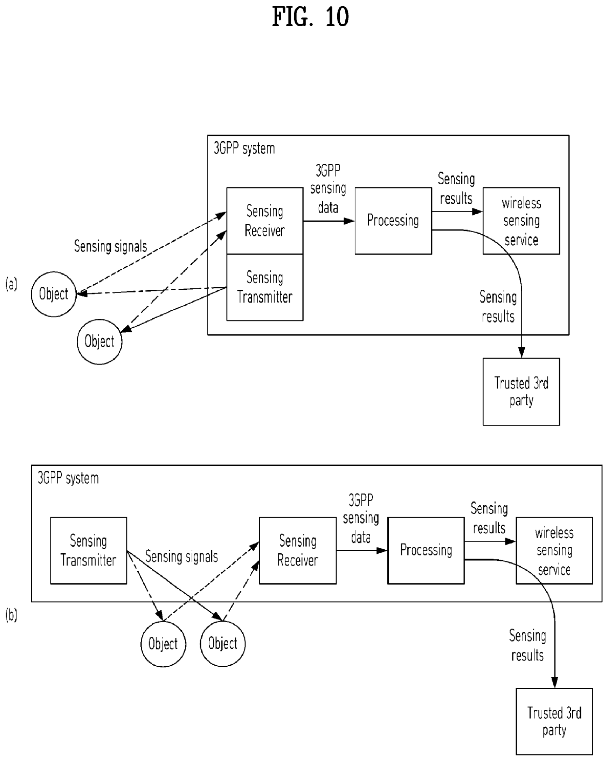

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

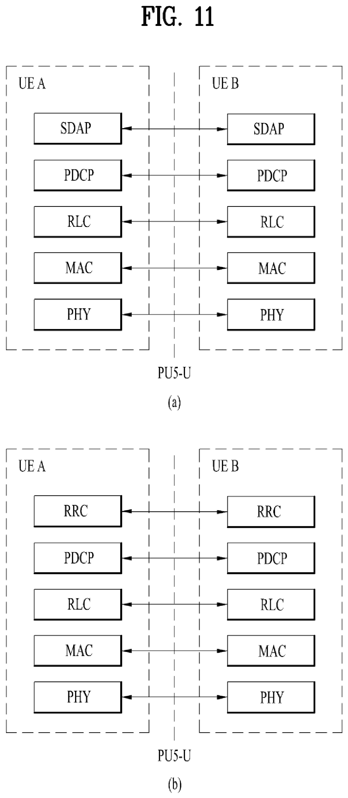

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

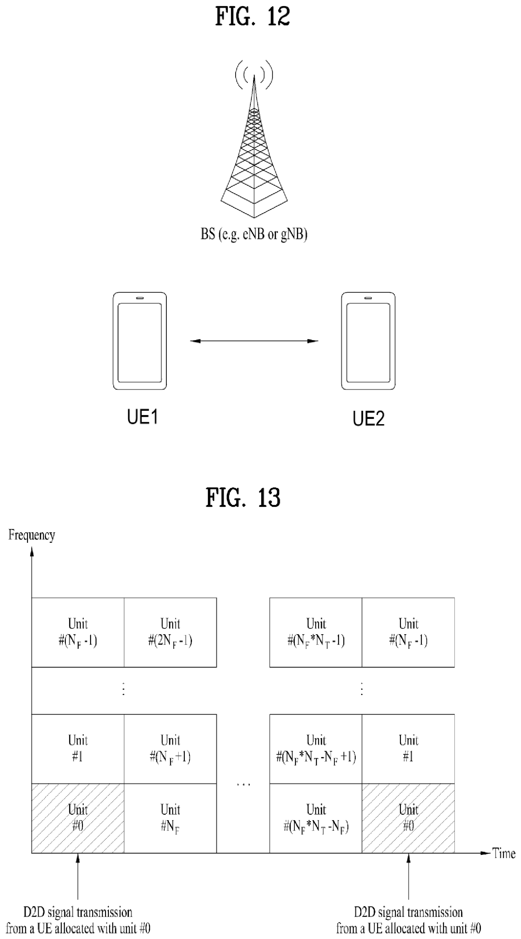

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

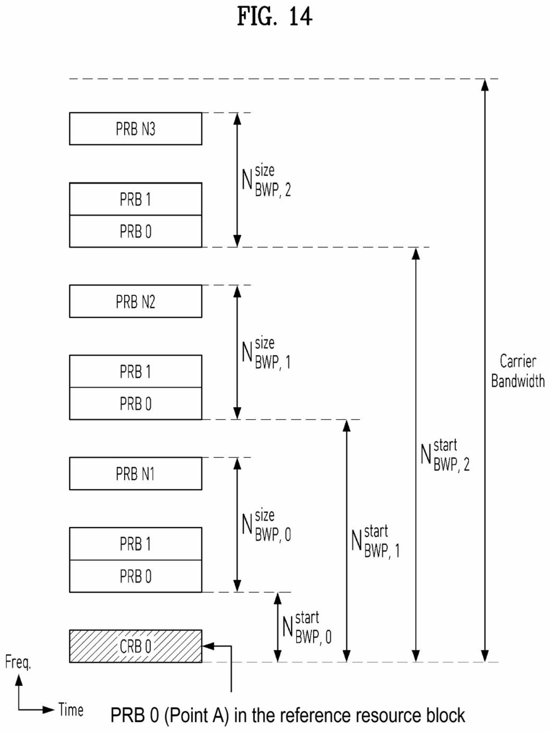

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

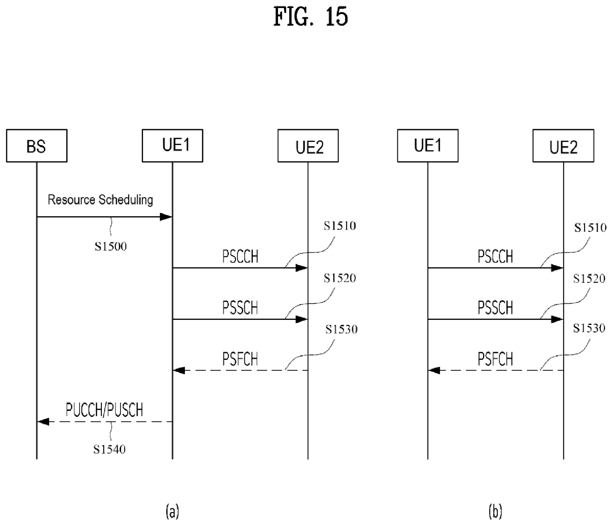

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in units of subchannels. For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

### OTDOA (Observed Time Difference of Arrival)

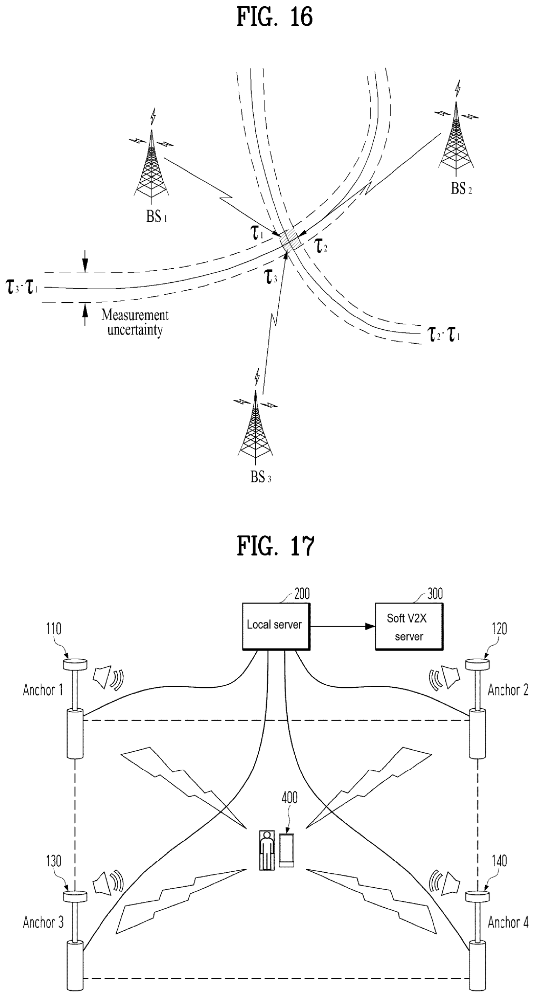

FIG. 16 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below. ${RSTDI}_{, 1} = \frac{\sqrt{{\left({x}_{t}-{x}_{i}\right)}^{2} + {\left({y}_{t}-{y}_{i}\right)}^{2}}}{c} - \frac{\sqrt{{\left({x}_{t}-{x}_{1}\right)}^{2} + {\left({y}_{t}-{y}_{1}\right)}^{2}}}{c} + \left({T}_{i}-{T}_{1}\right) + \left({n}_{i}-{n}_{1}\right)$

In Equation 1, c is the speed of light, {xₜ, yₜ} are (unknown) coordinates of a target UE, {xᵢ, yᵢ} are (known) coordinates of a TP, and {x₁, y₁} are coordinates of a reference TP (or another TP). Here, (Tᵢ-T₁) is a transmission time offset between two TPs, referred to as "real time differences" (RTDs), and nᵢ and n₁ are UE ToA measurement error values.

### E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

For example, the serving gNB may implement the E-CID positioning method using an E-UTRA measurement value provided by the UE.

Measurement elements usable for E-CID positioning may be, for example, as follows.
- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.
T_{ADV} Type 1 = (ng-eNB Rx-Tx time difference)+(UE E-UTRA Rx-Tx time difference)
TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotation.

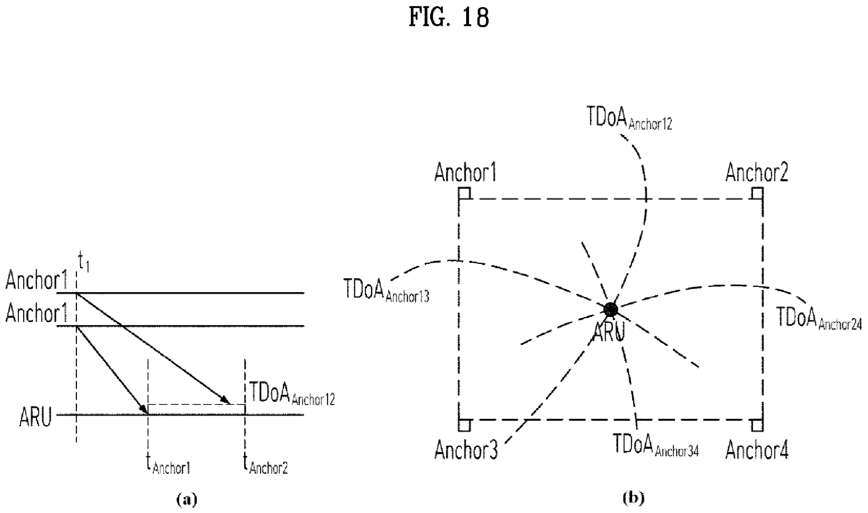

FIG. 17 and FIG. 18 are diagrams for explaining a positioning method.

An acoustic positioning system may be used to assist global positioning system (GPS) positioning in a wireless communication system.

Specifically, referring to FIG. 17, four anchors or RSUs 110, 120, 130, and 140 in a predefined geographic area may generate acoustic signals for acoustic positioning to improve positioning performance. A local server 200 may transmit a synchronized acoustic signal to a surrounding UE 400 through the RSUs 110, 120, 130, and 140. For example, the four anchors or RSUs 110, 120, 130, and 140 may generate acoustic signals synchronized at the local server 220 of the acoustic positioning system and transmit the acoustic signals through speaker units or the like. That is, the four anchors or RSUs 110, 120, 130, and 140 may simultaneously transmit the acoustic signals on different channels or frequency bands. The UE 400 (or a SoftV2X device of a VRU) may perform relative positioning with each of the RSUs based on the acoustic signals and estimate/measure the absolute position of the UE (or VRU) based on positioning parameters (at least one parameter received/configured by a SoftV2X server 300 or a network) and absolute positions of the RSUs 110, 120, 130, and 140.

Referring to FIG. 18(a), anchor 1 and anchor 2 may simultaneously transmit acoustic signals at a first time (t1). The UE 400 may receive the acoustic signals from each of anchor 1 and anchor 2 and calculate a reception time difference between the received acoustic signals. Thereafter, as described with reference to FIG. 16, the UE 400 may calculate a hyperbola based on the reception time difference and measure the position of the UE based on the hyperbola. Specifically, referring to FIG. 18(b), the UE 400 may receive acoustic signals from each of anchor 1, anchor 2, anchor 3, and anchor 4. The UE 400 may calculate a reception time difference between anchor 1 and anchor 2 (TDoA_{anchor12}), a reception time difference between anchor 1 and anchor 3 (TDoA _{anchor13}), a reception time difference between anchor 2 and anchor 4 (TDoA_{anchor24}), and a reception time difference between anchor 3 and anchor 4 (TDoA_{anchor34}). The UE 400 may calculate hyperbolas corresponding to the calculated reception time differences and measure/estimate the position thereof based on intersections of the hyperbolas. Here, Anchors 1 to 4 may also be defined as Channels 1 to 4. The proposed position measurement may naturally be applied not only to an acoustic wave signal but also to a wireless signal for wireless communication. Hereinafter, a method for measuring a position in association with a wireless signal will be described in detail.

### TDoA Positioning Apparatus Using Small Number of Anchors

According to a conventional positioning technique, four anchors or anchor nodes are configured, and a distance between a vulnerable road user (VRU) device or a user equipment (UE) and each anchor node needs to be calculated through bidirectional communication. Thereafter, the position of the VRU or the UE may be obtained or determined based on the calculated four distances. However, in an actual road environment, a problem exists in that the VRU or the UE is unlikely to be located at a position having a line-of-sight (LOS) environment for all four anchors. In consideration of such a problem, a positioning method using a smaller number of anchors needs to be proposed.

Hereinafter, a positioning method for reducing the number of anchors required for position measurement of a VRU or a UE by using an inertial measurement unit (IMU) sensor will be described in detail.

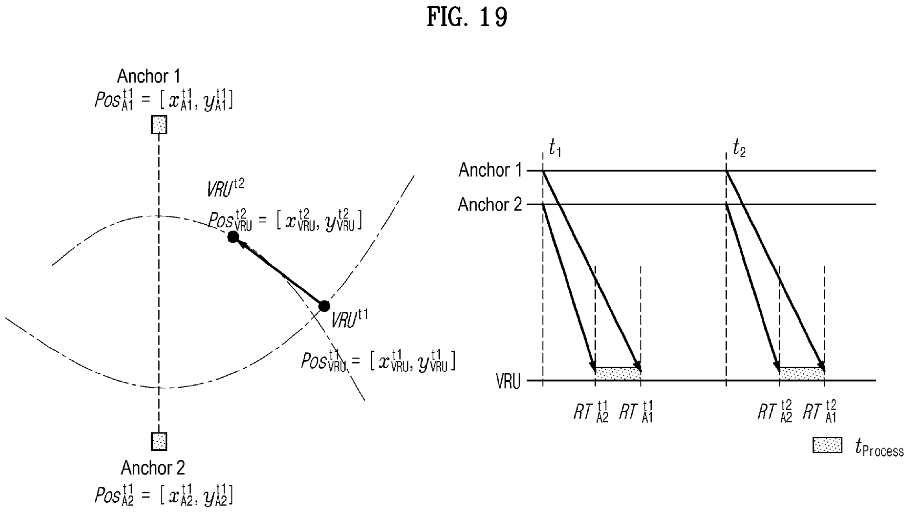

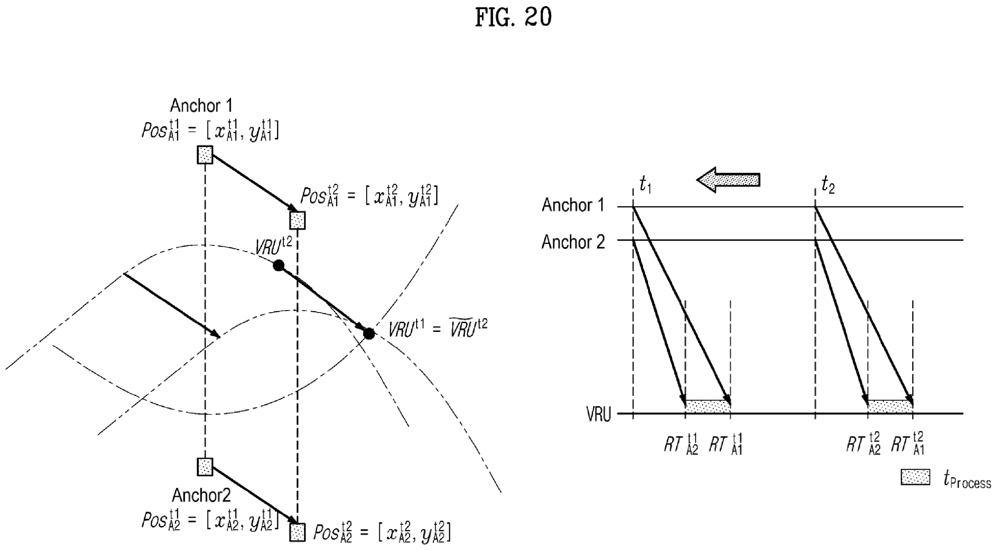

FIGS. 19 and 20 are diagrams for explaining a method in which a VRU or a UE calculates reception time differences based on two anchors.

Referring to FIG. 19, a VRU (or VRU device) or a UE (hereinafter defined as a VRU for convenience of description) may receive signals transmitted by two anchors at a first time t1 and a second time t2, and measure reception times of the signals. For example, the VRU may receive signals transmitted by the two anchors at the first time t1 and calculate reception times of signals from the two anchors ( ${RT}_{A 1}^{t 1} , {RT}_{A 2}^{t 1}$). Thereafter, the VRU may receive signals transmitted by the two anchors at the second time t2 and calculate reception times of signals from the two anchors ( ${RT}_{A 1}^{t 2} , {RT}_{A 2}^{t 2}$). In this case, the VRU may move between the first time t1 and the second time t2, and positions of the two anchors at the first time t1 may be shifted based on the amount of position change of the VRU.

Referring to FIG. 20, through position shifting of the two anchors and/or the VRU, the position of the VRU at the first time t1 may be shifted to the position of the VRU at the second time t2. In this case, the VRU may assume reception of signals from four anchors at the second time t2. Alternatively, when the second time t2 arrives, the VRU may shift the positions of the two anchors at the first time t1 by using the amount of position change corresponding to movement from the first time t1 to the second time t2, and the VRU at another time (for example, the first time) may be aligned with the VRU at the second time. Through this process, four anchors may be observed.

Accordingly, the VRU may effectively perform TDoA-based position measurement even with only two anchors by additionally using the amount of position change measured by an IMU sensor. Hereinafter, a configuration of the VRU performing position measurement will be described in detail.

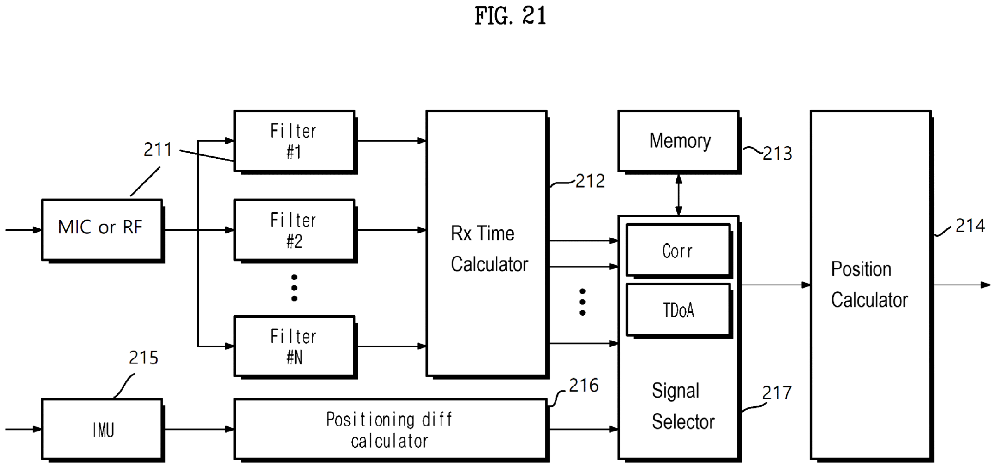

FIG. 21 is a block diagram for explaining a configuration of a VRU for performing position measurement.

Referring to FIG. 21, the VRU may receive an acoustic wave signal or a wireless signal received through a microphone (MIC) or a radio frequency (RF) receiver 211. A reception time of the wireless signal received through the RF receiver may be measured/calculated through a signal analyzer or a reception (Rx) time calculator 212. Alternatively, the received acoustic wave signal may be separated through filters corresponding to respective anchors, and a reception time of the acoustic wave signal may be measured/calculated through the signal analyzer or the Rx time calculator 212. Thereafter, the acoustic wave signal or the wireless signal may be transmitted to a signal selection block 217, and a memory 213 may store a processed signal and a reception time. The VRU may include an IMU sensor 215 and a position change calculator 216 for measuring an amount of position change after reception of the acoustic wave signal or the wireless signal.

The signal selection block 217 or a position calculator 214 may calculate a TDoA hyperbola corresponding to a first time t1 and a second time t2 based on reception times stored in the memory 213, and calculate the position of the VRU based on the TDoA hyperbola. This method has an advantage in that TDoA may be calculated through correlation using a waveform of a previously received signal even when communication conditions are poor.

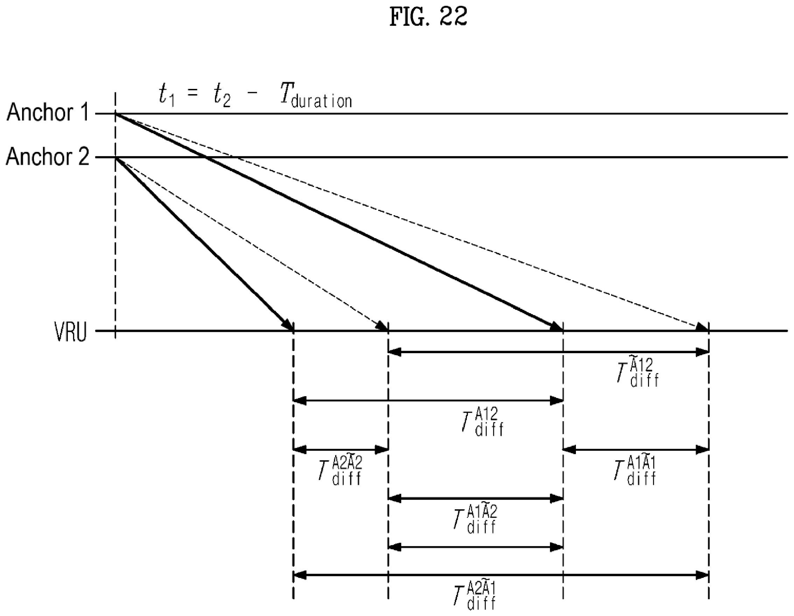

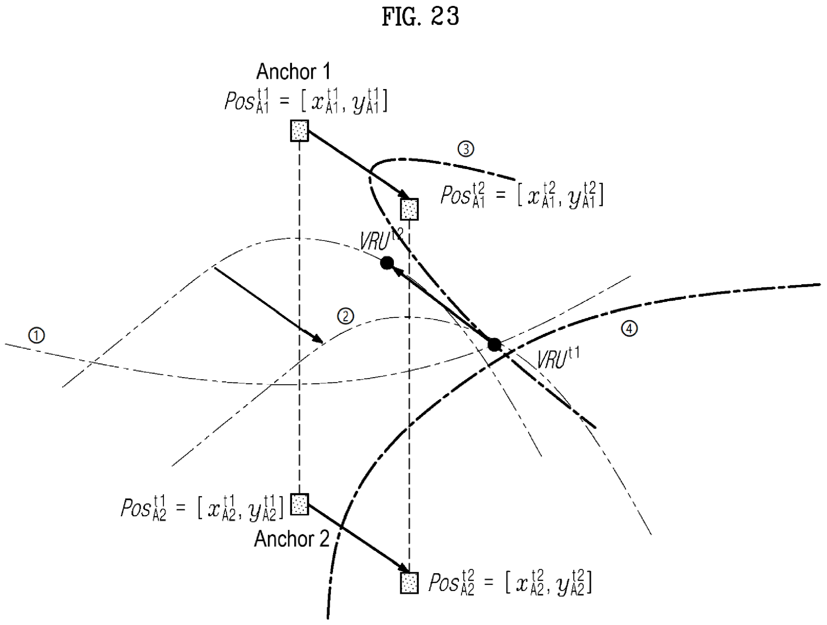

FIGS. 22 and 23 are diagrams for explaining a method in which a VRU calculates a position based on TDoA.

Referring to FIG. 22, a transmission time or a reception time of a signal transmitted at a second time t2 may be shifted to a first time t1. In this case, a solid line represents a reception time of a signal transmitted at the first time t1, and a dotted line represents a reception time obtained by shifting a reception time of a signal transmitted at the second time t2 by a time difference between the first time t1 and the second time t2 (hereinafter referred to as a corrected reception time).

In this case, the VRU may calculate, based on conventional TDoA, a reception time difference between signals transmitted by two anchors at the first time ( ${T}_{diff}^{A 12}$) and a reception time difference between signals transmitted by the two anchors at the second time t2 ( ${T}_{diff}^{{A}^{˜} 12}$). The reception time differences calculated as described above may be obtained from signals transmitted through the same synchronized transmission and may have a characteristic independent of IMU error. Next, the VRU may additionally calculate reception time differences between the same anchors ( ${T}_{diff}^{A 1 {A}^{˜} 1} , {T}_{diff}^{A 2 {A}^{˜} 2}$) based on the corrected reception time described above. Here, signals used to calculate the reception time differences ( ${T}_{diff}^{A 1 {A}^{˜} 1} , {T}_{diff}^{A 2 {A}^{˜} 2}$) may correspond to signals transmitted by the same anchors from the same positions and through the same channels, and have similar reception signal characteristics. In addition, the VRU may calculate reception time differences between signals transmitted at different times and from different anchors based on the corrected reception time and a reference reception time ( ${T}_{diff}^{A 1 {A}^{˜} 2} , {T}_{diff}^{A 2 {A}^{˜} 1}$). Here, ${T}_{diff}^{A 1 {A}^{˜} 1} , {T}_{diff}^{A 2 {A}^{˜} 2} , {T}_{diff}^{A 1 {A}^{˜} 2}$, and ${T}_{diff}^{A 2 {A}^{˜} 1}$ may include an error of an IMU sensor, but the values may be required to calculate hyperbolas corresponding to different positions according to position characteristics of anchors in calculation of the position of the VRU (alternatively, although the values include IMU error, the values may be used when installation position characteristics between anchors are required, thereby obtaining hyperbolas corresponding to different positions).

Referring to FIG. 23, the VRU may calculate the position of the VRU through two anchors based on the above-described method (a calculation method of TDoA values described with reference to FIG. 22).

For example, the VRU may move from a first position **(VRU***^{t}***¹)** at a first time t1 to a second position (***VRU***^{***t***2)} at a second time t2. In this case, a first hyperbola (①) may be calculated based on a reception time difference of signals received from two anchors at the first position (***VRU*^{*t*1}**) ( ${T}_{diff}^{A 12}$) and/or positions of the two anchors. A second hyperbola (②) may be calculated based on a corrected reception time difference ( ${T}_{diff}^{{A}^{˜} 12}$) obtained by shifting a reception time difference of signals transmitted at the second time t2 to the first time t1 and positions of the two anchors (virtual anchors obtained by shifting existing anchors based on an amount of position change). The VRU may calculate/obtain the position of the VRU at the first time t1 based on an intersection of the first hyperbola (①) and the second hyperbola (②). When a measured amount of position change is added to the calculated position of the VRU at the first time t1, the position of the VRU at the second time t2 may be calculated. Among the two anchors, signal quality of one anchor may be poor at the first time or the second time, and positioning performance based on the intersection of the first hyperbola (①) and the second hyperbola (②) may be predicted to be low. In this case, the VRU may improve performance of the position measurement by calculating the position of the VRU based on reception times excluding a reception time corresponding to a signal of a specific anchor at a specific time having poor signal quality. For example, signal quality of a signal of anchor 2 at the second time t2 may be degraded (for example, signal quality of the signal of anchor 2 at the second time t2 may be lower than a predetermined threshold). In this case, the VRU may obtain a positioning value using reception time differences ( ${T}_{diff}^{A 12} , {T}_{diff}^{A 1 {A}^{˜} 1} , {T}_{diff}^{A 2 {A}^{˜} 1}$) based on reception times excluding a reception time of a signal of anchor 2 transmitted at the second time t2 (for example, reception times of signals of anchor 1 and anchor 2 transmitted at the first time t1 and a reception time of a signal of anchor 1 transmitted at the second time t2 (or virtual anchor 1 obtained by shifting the position of anchor 1 by an amount of position change)). For example, the VRU may calculate the position of the VRU at the first time t1 based on an intersection of the first hyperbola (①) and a third hyperbola (③). Alternatively, to obtain a position measurement value in which influence of synchronization between anchors and influence of channels are minimized, the VRU may measure/calculate the position of the VRU at the first time t1 based on reception time differences corresponding to the same anchors ( ${T}_{diff}^{A 1 {A}^{˜} 1} , {T}_{diff}^{A 2 {A}^{˜} 2}$). For example, when a synchronization error between anchors is greater than or equal to a predetermined threshold or when a difference in channel states between anchors is greater than or equal to a predetermined threshold difference, the VRU may measure/calculate the position of the VRU at the first time t1 based on reception time differences corresponding to the same anchors ( ${T}_{diff}^{A 1 {A}^{˜} 1} , {T}_{diff}^{A 2 {A}^{˜} 2}$) (for example, between anchor 1 and virtual anchor 1 obtained by shifting the position of anchor 1 or between anchor 2 and virtual anchor 2 obtained by shifting the position of anchor 2).

Hereinafter, a method for measuring the position of a VRU by selecting two anchors when at least two or more anchors for position measurement are present will be described in detail.

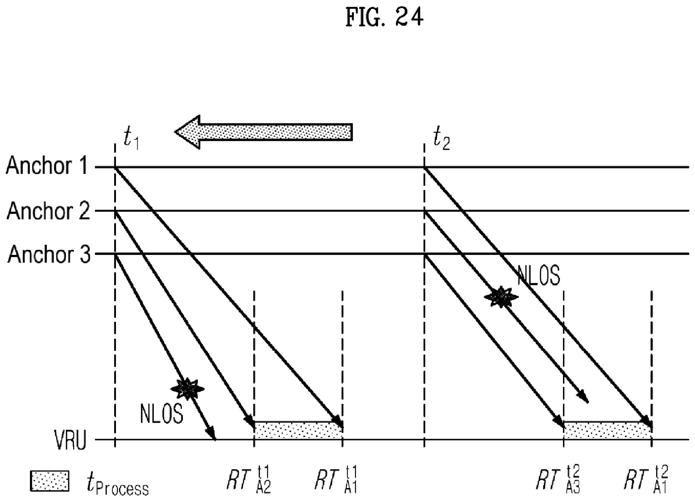

FIGS. 24 to 27 are diagrams for explaining a method in which a VRU selects two anchors from among two or more anchors and measures a position.

For position measurement of a VRU, a plurality of anchors may be additionally present, and at least one anchor among the plurality of anchors may be located in a non-line-of-sight (NLOS) environment. In this case, the VRU may calculate a hyperbola for two anchors in a LOS environment among the plurality of anchors, and calculate hyperbolas for two anchors in a LOS environment at a subsequent time by using an IMU (anchors identical to or different from the previous two anchors).

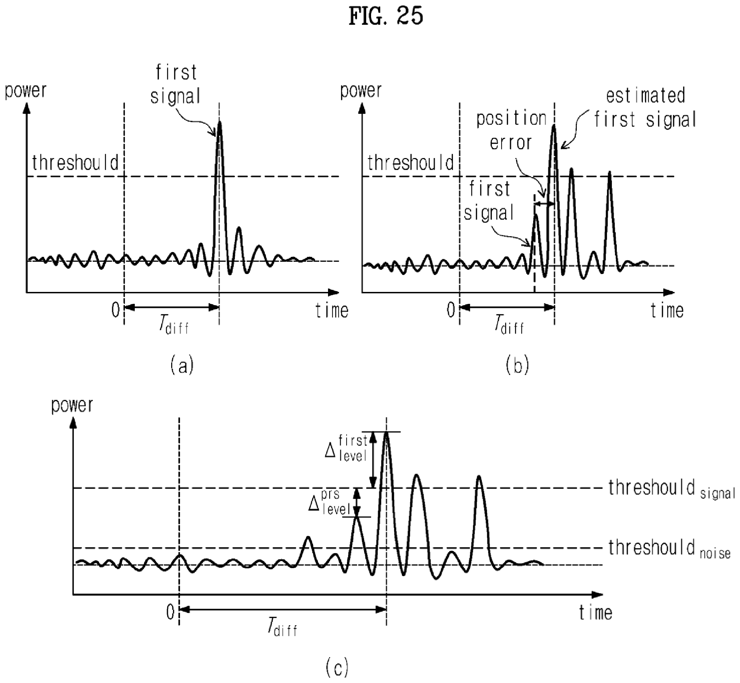

Specifically, referring to FIG. 24, the VRU may recognize that three or more anchors are not simultaneously located in a LOS environment according to a road situation, and perform positioning by selecting two anchors located in the LOS environment among the three or more anchors. In this case, in relation to selection of anchors located in the LOS environment, the VRU may select the anchors located in the LOS environment based on reception strength of a first signal as illustrated in FIG. 25.

FIG. 25(a) illustrates a waveform of a signal received from an anchor located in a LOS environment, and FIG. 25(b) illustrates a waveform of a signal received from an anchor located in an NLOS environment. For an anchor located in a LOS environment, since no obstacle exists between transmitters and receivers, the first signal may have the highest energy. In contrast, for an anchor located in an NLOS environment, since an obstacle exists in a direct path, reception strength of the first signal may be weakened, and a signal received after diffraction may be misidentified as the first signal. Such misidentification of the first signal may be reflected as an error in a distance between the anchor and the VRU and may affect a position measurement result of the VRU.

In order to prevent such misidentification, the VRU may determine a channel state of signals received from anchors and select a positioning value for position measurement based on signals received from two best anchors. For example, referring to FIG. 25(c), the VRU may calculate a difference between a reception level of a first signal and a signal level greater than a noise level for signals received from a plurality of anchors and select two anchors predicted to be located in a LOS environment among the plurality of anchors based on the difference. For example, the VRU may select two anchors in descending order of a difference between the reception level of the first signal and a signal level greater than the noise level with respect to signals received from each of the plurality of anchors. In this case, the VRU may select two best anchors (or signals corresponding to the two best anchors) for each time duration.

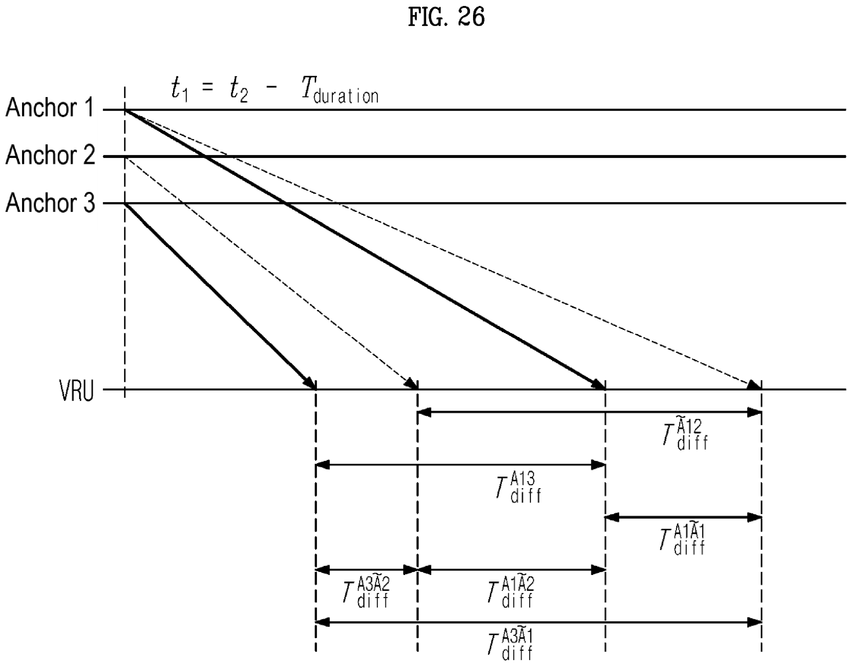

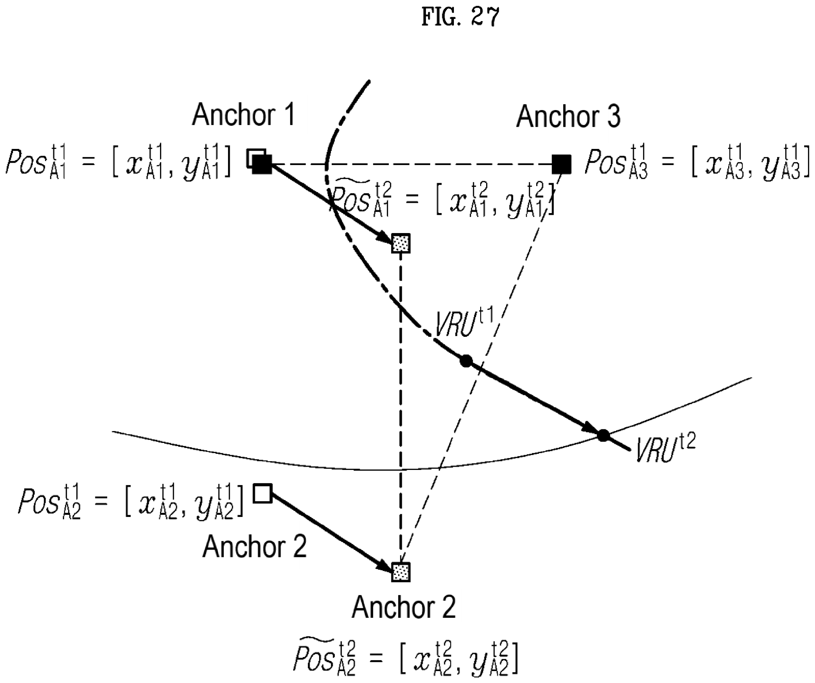

Specifically, referring to FIG. 26, the VRU may select anchor 1 and anchor 2 as anchors for positioning at a first time t1 among anchor 1, anchor 2, and anchor 3 based on the above-described signal level difference, and select anchor 1 and anchor 3 as anchors for positioning at a second time t2. Here, it is assumed that a reception time of a signal at the first time is shifted/corrected to a reception time of a signal at the second time (for example, a corrected reception time). In this case, the VRU may calculate two hyperbolas based on a reception time difference value ( ${T}_{diff}^{{A}^{˜} 12}$) between anchor 1 and anchor 2 at the first time having a good channel state and a reception time difference value ( ${T}_{diff}^{A 13}$) between anchor 1 and anchor 3 at the second time. The VRU may calculate/estimate a position value or position of the VRU based on the two calculated hyperbolas. For example, referring to FIG. 27, the VRU may calculate the two hyperbolas based on the two reception time difference values ( ${T}_{diff}^{A 13} , {T}_{diff}^{{A}^{˜} 12}$) and calculate/estimate a position value of the VRU at the second time t2 through an intersection of the two hyperbolas.

When performance of anchor 2 is poor, the VRU may calculate two hyperbolas based on the reception time difference value ( ${T}_{diff}^{A 13}$) between anchor 1 and anchor 3 at the second time and a reception time difference value ( ${T}_{diff}^{A 1 {A}^{˜} 1}$) between anchor 1 at the first time and anchor 1 at the second time, and measure the position of the VRU based on the calculated two hyperbolas. Alternatively, when performance of anchor 3 is poor, the VRU may calculate two hyperbolas based on a reception time difference value ( ${T}_{diff}^{A 12}$) between anchor 1 and anchor 2 at the second time and the reception time difference value ( ${T}_{diff}^{A 1 {A}^{˜} 1}$) between anchor 1 at the first time and anchor 1 at the second time, and measure the position of the VRU based on the calculated two hyperbolas. Alternatively, to obtain a positioning result with better performance, the VRU may additionally calculate TDoA values using ( ${T}_{diff}^{A 3 {A}^{˜} 2} , {T}_{diff}^{A 1 {A}^{˜} 2} , {T}_{diff}^{A 3 {A}^{˜} 1}$).

Hereinafter, a method in which the VRU transmits additional information to anchors and the anchors adjust transmission times of signals for improving positioning performance will be described in detail.

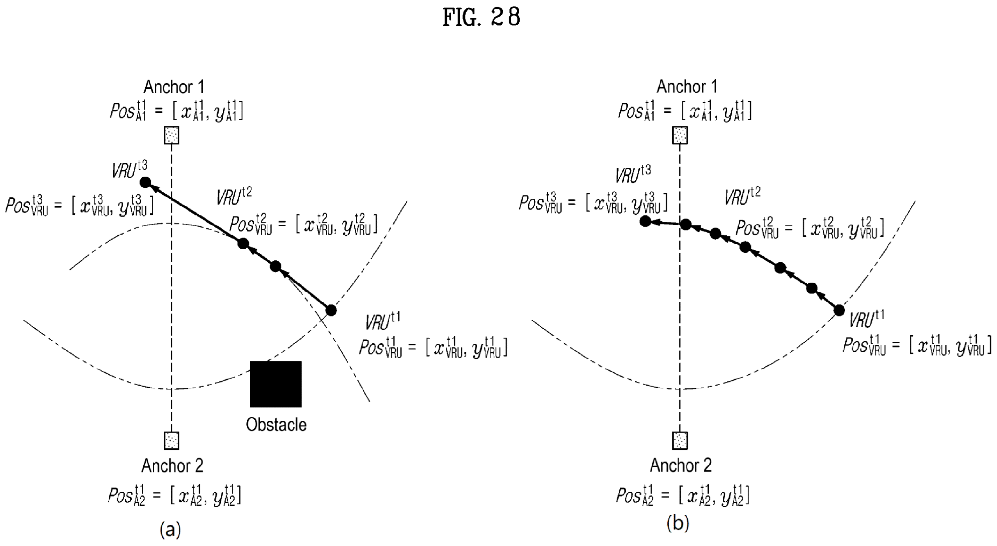

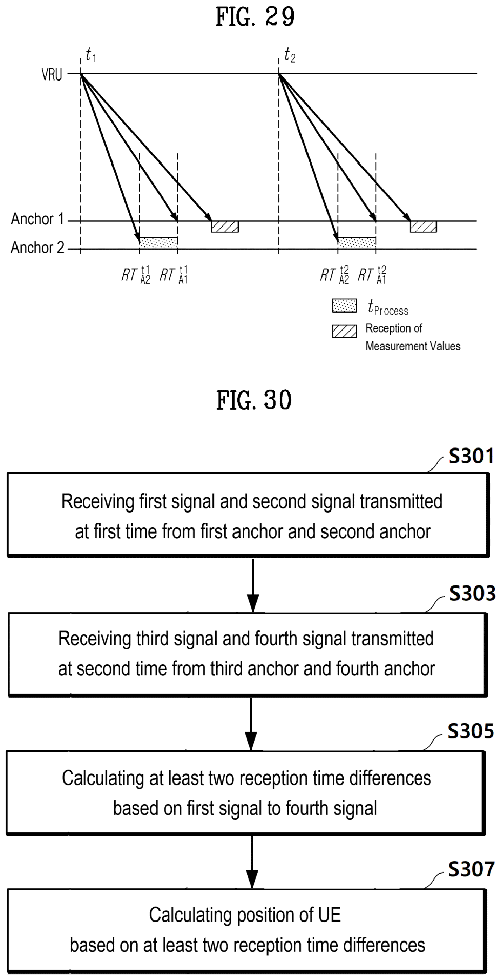

FIGS. 28 and 29 are diagrams for explaining a method in which a VRU transmits additional information to anchors for improving positioning performance.

Hereinafter, in order to additionally obtain better positioning performance, the VRU may report additional information including a position shift value or an amount of position change measured using a sensor of the VRU (for example, an amount of position change between a first time and a second time) and state information on a signal received from an anchor. In this case, an anchor may adjust a transmission time of a signal for positioning based on the additional information.

Referring to FIG. 28, an obstacle may exist between the anchor and the VRU. In this case, a problem may occur in which the VRU is incapable of performing rapid positioning due to a limited number of anchors. As illustrated in FIG. 28(a), when the anchor is in an NLOS situation with respect to the VRU, the VRU may report additional information on the detected obstacle or the NLOS situation to the anchor, and the anchor may change/decrease a transmission period of a signal based on the additional information. Alternatively, when the VRU moves slowly (or moves quickly), the VRU may report additional information on a speed of the VRU to the anchor. For example, the VRU may report the amount of movement change/position change obtained through the IMU sensor to the anchor, and the anchor may change the transmission period of the signal based on the amount of movement change/position change. For example, when the amount of movement change/position change is greater than or equal to a first specific threshold change amount, the anchor may reduce the transmission period of the signal, and when the amount of movement change/position change is less than a second specific threshold change amount, the anchor may increase the transmission period of the signal. In this case, by adjusting the transmission period of the signal according to a change in a moving speed of the VRU, the signal for positioning may be transmitted with an appropriate period corresponding to the moving speed of the VRU, thereby ensuring high positioning performance. In addition, overload of the anchor may be prevented according to a situation.

For example, due to characteristics of a TDoA system, VRUs may periodically upload sensor values of the VRUs (for example, IMU) and measurement values (for example, channel state information) in an environment in which services are provided to a plurality of VRUs by one anchor. In this case, the anchor system may collect information of devices/VRUs received from the plurality of VRUs and adjust/control a TDoA transmission period by statistically analyzing the collected information.

As a one-way positioning technique, a TDoA method has been described in which anchors simultaneously transmit signals for positioning and a VRU measures reception time differences of received signals to measure the position of the VRU. However, the present disclosure is not limited thereto. For example, as illustrated in FIG. 29, the present disclosure may also be applied to a method in which a VRU directly transmits a signal for positioning and synchronized anchors measure reception time differences of received signals to perform positioning for the VRU. In this case, the VRU may transmit, to an anchor (one anchor selected/determined among a plurality of anchors), information including an amount of position change measured by an IMU and measurement values related to a channel state, and the anchor may measure/calculate the position of the VRU based on the received information.

As described above, the present disclosure may ensure position measurement using a small number of anchors even when a LOS environment for some anchors among a plurality of anchors for position measurement is not secured. Alternatively, the present disclosure may significantly improve performance of position measurement by selecting optimal anchors and/or reception time difference values for TDoA calculation through analysis of channel environments for respective anchors. Alternatively, the present disclosure may ensure optimal positioning performance even in a constrained installation environment of anchors by providing a positioning method using at least two anchor nodes.

FIG. 30 is a diagram for explaining a method in which a UE measures a position using anchors.

A UE or VRU may calculate reception time differences based on signals transmitted by respective anchors according to the TDoA technique as described above, and measure the position of the UE or VRU based on the calculated reception time differences. The UE may be a VRU, and hereinafter the UE will be used for convenience of description.

Specifically, referring to FIG. 30, the UE may receive a first signal and a second signal transmitted at a first time from a first anchor and a second anchor (S301). For example, the first anchor and the second anchor may be synchronized with each other and may simultaneously transmit signals for position measurement based on a specific transmission period. In this case, the UE may receive the first signal transmitted at the first time from the first anchor and receive the second signal transmitted at the first time from the second anchor.

Alternatively, as described with reference to FIG. 24, the UE may receive signals for position measurement from a plurality of anchors (three or more anchors) and determine a channel state of each of the plurality of anchors and/or whether each anchor is located in a LOS environment based on the received signals. The UE may select the first anchor and the second anchor from among the plurality of anchors in descending order of channel state quality or select the first anchor and the second anchor from among anchors located in the LOS environment among the plurality of anchors. As described with reference to FIG. 25, whether an anchor is located in the LOS environment may be determined based on a difference between reception strength of a first received signal (having strength greater than or equal to a predetermined threshold) and reception strength of a noise signal received with strength greater than or equal to a predetermined noise threshold.

Next, the UE may receive a third signal and a fourth signal transmitted at a second time from a third anchor and a fourth anchor (S303). Here, the second time may be a time separated from the first time by the predetermined transmission period. That is, the second time may be a time earlier than the first time by the predetermined transmission period or a time after the first time by the predetermined transmission period. For example, the UE may receive the third signal transmitted at the second time from the third anchor and receive the fourth signal transmitted at the second time from the fourth anchor.

As described above, the third anchor and the fourth anchor may be virtual anchors obtained by shifting positions of the first anchor and the second anchor based on an amount of position change of the UE. Specifically, the UE may measure the amount of position change during a time interval between the first time and the second time using a sensor such as an IMU. The UE may shift the position of the first anchor and the position of the second anchor by the amount of position change and assume that virtual anchors are located at the shifted positions. For example, as illustrated in FIG. 20 and FIG. 23, the UE may shift the position of the first anchor and the position of the second anchor by the amount of position change measured during the time interval between the first time and the second time, and assume that the third anchor is located at the shifted position of the first anchor and the fourth anchor is located at the shifted position of the second anchor. That is, the third anchor is the same anchor as the first anchor but corresponds to a virtual anchor assumed to be located at a position obtained by shifting the position of the first anchor by the amount of position change. Similarly, the fourth anchor is the same anchor as the second anchor but corresponds to a virtual anchor assumed to be located at a position obtained by shifting the position of the second anchor by the amount of position change.

Although the third anchor and the fourth anchor have been described as virtual anchors corresponding to the first anchor and the second anchor, the present disclosure is not limited thereto. Since the present disclosure may also be applied to a method of generating two virtual anchors corresponding to two anchors based on an amount of position change, the proposed method may also be applied when the first anchor and the second anchor correspond to virtual anchors for the third anchor and the fourth anchor.

Alternatively, as described with reference to FIG. 24, the UE may select two anchors from among a plurality of anchors based on a channel state measured at the second time and/or a LOS environment, and determine virtual anchors obtained by shifting positions of the selected two anchors by the amount of position change as the third anchor and the fourth anchor. In this case, the third anchor or the fourth anchor may be a virtual anchor obtained by shifting the position of an anchor other than the first anchor or the second anchor.

Next, the UE may calculate at least two reception time differences based on the first signal to the fourth signal (S305). For example, the UE may select at least three anchors as target anchors for calculating reception time differences based on channel states of the first anchor, the second anchor, the third anchor, and the fourth anchor or whether the anchors are located in a LOS environment. In this case, the UE may calculate the at least two reception time differences using signals received from the selected three anchors. For example, when it is detected that among the first anchor, the second anchor, the third anchor, and the fourth anchor, the third anchor is in an NLOS environment (reception strength of the third signal is lower than a predetermined threshold), the UE may calculate the at least two reception time differences using only signals received from the first anchor, the second anchor, and the fourth anchor, excluding the third anchor.

Alternatively, based on synchronization error between the first anchor and the second anchor being greater than or equal to a predetermined error threshold, the UE may measure/calculate the position of the UE by considering only signal reception time differences between anchors that are actually the same anchors. For example, when proper synchronization between the first anchor and the second anchor is not achieved, the UE may calculate only a first reception time difference between the first anchor and the third anchor, which is a virtual anchor obtained by shifting only the position of the first anchor, and a second reception time difference between the second anchor and the fourth anchor, which is a virtual anchor obtained by shifting only the position of the second anchor. Then, the UE may measure/calculate the position of the UE based on the first reception time difference and the second reception time difference. In this case, since reception time differences between different anchors are not calculated, the UE may calculate the position of the UE without reflecting the synchronization error.

As described above, the reception time of the third signal received from the third anchor and the reception time of the fourth signal received from the fourth anchor may need to be corrected based on the time interval (the difference between the first time and the second time) in order to be used for position measurement of the UE. For example, the UE may correct the reception time of the third signal to a value obtained by subtracting (or adding) the time interval from (or to) the reception time of the third signal and correct the reception time of the fourth signal to a value obtained by subtracting (or adding) the time interval from (or to) the reception time of the fourth signal. The UE may calculate a plurality of reception time differences based on the reception time of the first signal, the reception time of the second signal, the corrected reception time of the third signal, and the corrected reception time of the fourth signal. In this case, as described with reference to FIG. 22 and FIG. 26, the UE may select at least two reception time differences for position measurement of the UE from among the plurality of reception time differences based on channel states of the first anchor, the second anchor, the third anchor, and the fourth anchor or whether the anchors are located in a LOS environment.

Next, the UE may calculate the position of the UE based on the at least two reception time differences (S307). For example, as described above, the UE may calculate at least two hyperbolas corresponding to the at least two reception time differences based on the positions of the first anchor to the fourth anchor. The UE may calculate the position of the UE as an intersection of two hyperbolas corresponding to the at least two reception time differences. Alternatively, the UE may correct the calculated position of the UE based on the amount of position change and calculate the position of the UE at the first time or the second time.

Alternatively, the UE may change the time interval between the first time and the second time based on the amount of position change. For example, when the amount of position change measured during the predetermined transmission period is less than a predetermined threshold change amount (for example, when a distance between virtual anchors and actual anchors is not suitable for position measurement), the UE may determine the second time for position measurement as a next predetermined transmission period. That is, when the amount of position change is less than the predetermined threshold change amount, the UE may set the second time to a time after two predetermined transmission periods from the first time and perform position measurement according to the proposed method described above.

Alternatively, the UE may report information on the amount of position change to the first anchor or the second anchor in order to change transmission periods of the first signal and the second signal as described above. In this case, the first anchor or the second anchor may reduce or increase the transmission periods of the first signal and the second signal based on the amount of position change. For example, when the amount of position change is less than a first predetermined threshold change amount, the first anchor or the second anchor may increase the transmission periods of the first signal and the second signal. Alternatively, when the amount of position change is greater than or equal to a second predetermined threshold change amount (greater than the first predetermined threshold change amount), the first anchor or the second anchor may reduce the transmission periods of the first signal and the second signal.

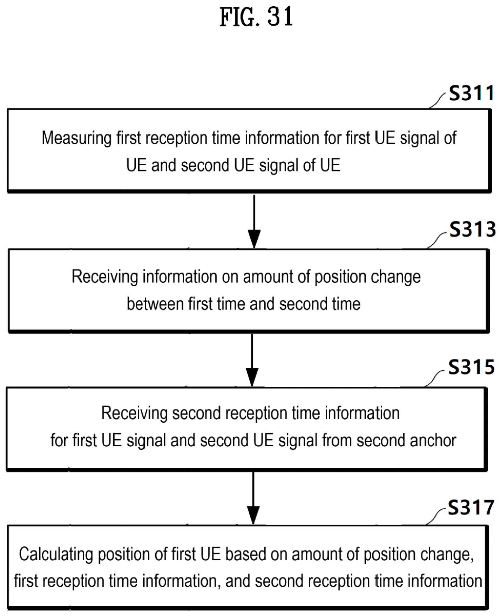

FIG. 31 is a diagram for explaining a method in which a first anchor measures a position of a UE.

Specifically, referring to FIG. 31, a first anchor may measure first reception time information for a first UE signal of the UE transmitted at a first time and a second UE signal of the UE transmitted at a second time (S311). For example, the first anchor may receive the first UE signal transmitted at the first time from the UE and measure a reception time of the first UE signal. The first anchor may receive the second UE signal transmitted at the second time from the UE and measure a reception time of the second UE signal.

Next, the first anchor may receive information on an amount of position change between the first time and the second time from the UE (S313).

Then, the first anchor may receive second reception time information from a second anchor, which is another anchor (S315). The second reception time information may include information on a reception time of the first UE signal and a reception time of the second UE signal measured at the second anchor.

Subsequently, the first anchor may measure the position of the UE based on the amount of position change, the first reception time information, and the second reception time information (S317). For example, the first anchor may generate a virtual third anchor corresponding to the first anchor and generate a virtual fourth anchor corresponding to the second anchor based on the amount of position change. The first anchor may correct a reception time of the second UE signal corresponding to the virtual third anchor and a reception time of the second UE signal corresponding to the virtual fourth anchor based on the time interval between the first time and the second time. Thereafter, the first anchor may calculate at least two reception time differences according to the method described with reference to FIG. 30 and calculate the position of the UE based on the calculated at least two reception time differences. The first anchor may transmit the calculated position of the UE to the UE or to an LMF.

As described above, the present disclosure may ensure position measurement using a small number of anchors even when a LOS environment for some anchors among a plurality of anchors for position measurement is not secured. Alternatively, the present disclosure may significantly improve performance of position measurement by selecting optimal anchors and/or reception time difference values for TDoA calculation through analysis of channel environments for respective anchors. Alternatively, the present disclosure may ensure optimal positioning performance even in a constrained installation environment of anchors by providing a positioning method using at least two anchor nodes.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

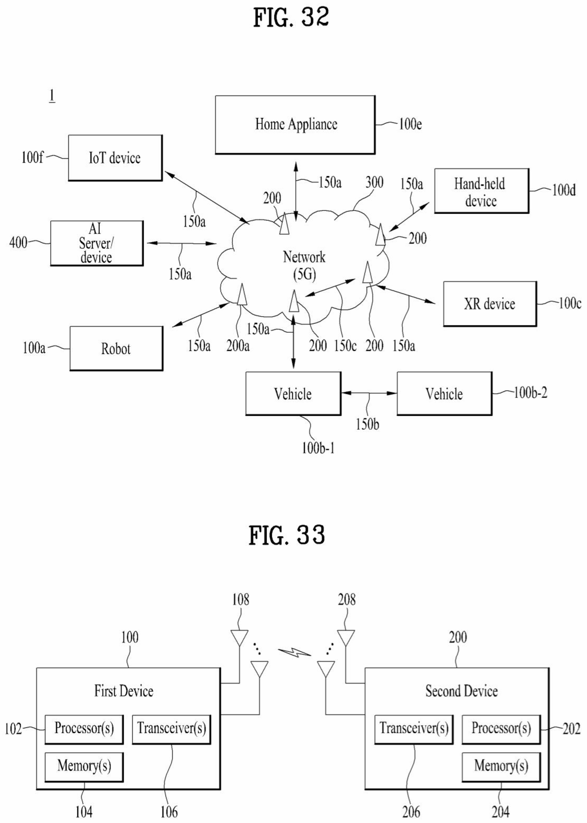

FIG. 32 illustrates a communication system applied to the present disclosure.

Referring to FIG. 32, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 33 illustrates a wireless device applicable to the present disclosure.

Referring to FIG. 33, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 32.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a UE may include the processor(s) 102 and the memory(s) 104 connected to the transceiver(s) 106. The memory(s) 104 may include at least one program capable of performing operations related to the embodiments described with reference to FIG. 17 to FIG. 31.

The processor(s) 102 may control the transceiver(s) 106 to receive a first signal and a second signal corresponding to a first time from a first anchor and a second anchor, control the transceiver(s) 106 to receive a third signal and a fourth signal corresponding to a second time from a third anchor and a fourth anchor, and calculate at least two reception time differences for position measurement of the UE based on the first signal to the fourth signal. The third anchor and the fourth anchor may be virtual anchors obtained by shifting positions of the first anchor and the second anchor by an amount of position change of the UE measured during a time interval between the first time and the second time.

Alternatively, a processing apparatus for controlling a UE including the processor(s) 102 and the memory(s) 104 may be configured. The processing apparatus may include at least one processor and at least one memory connected to the at least one processor and storing instructions that, when executed by the at least one processor, to cause the UE to receive a first signal and a second signal corresponding to a first time from a first anchor and a second anchor, receive a third signal and a fourth signal corresponding to a second time from a third anchor and a fourth anchor, and calculate at least two reception time differences for position measurement of the UE based on the first signal to the fourth signal. The third anchor and the fourth anchor may be virtual anchors obtained by shifting positions of the first anchor and the second anchor by an amount of position change of the UE measured during a time interval between the first time and the second time.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 or a first anchor may include the processor(s) 202 and the memory(s) 204 connected to the transceiver(s) 206. The memory(s) 204 may include at least one program capable of performing operations related to the embodiments described with reference to FIG. 17 to FIG. 31.

For example, the processor(s) 202 may control the transceiver(s) 206 to measure, at the first anchor, first reception time information for a first UE signal of the UE transmitted at a first time and a second UE signal of the UE transmitted at a second time, receive information on an amount of position change between the first time and the second time from the UE, receive second reception time information measured at a second anchor for the first UE signal and the second UE signal from the second anchor, and measure the position of the UE based on the amount of position change, the first reception time information, and the second reception time information.

Alternatively, a processing apparatus for controlling a first anchor including the processor(s) 202 and the memory(s) 204 may be configured. The processing apparatus may include at least one processor and at least one memory connected to the at least one processor and storing instructions that, when executed by the at least one processor, cause the first anchor to measure, at the first anchor, first reception time information for a first UE signal of the UE transmitted at a first time and a second UE signal of the UE transmitted at a second time, receive information on an amount of position change between the first time and the second time from the UE, receive second reception time information measured at a second anchor for the first UE signal and the second UE signal from the second anchor, and measure the position of the UE based on the amount of position change, the first reception time information, and the second reception time information.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

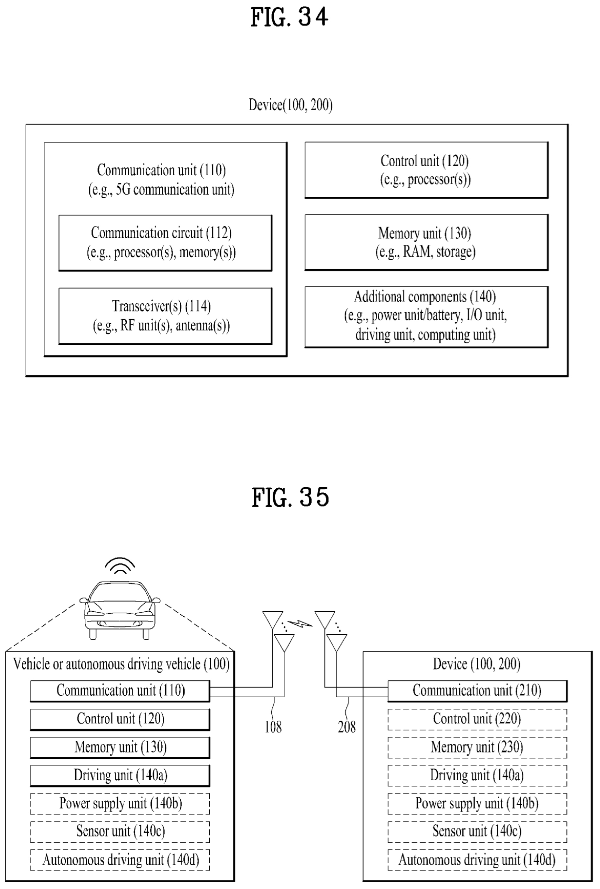

FIG. 34 illustrates another example of a wireless device applied to the present disclosure. The wireless device may be implemented in various forms according to a use-case/service (refer to FIG. 32)

Referring to FIG. 34, wireless devices 100 and 200 may correspond to the wireless devices 100 and 200 of FIG. 33 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 33. For example, the transceiver(s) 114 may include the one or more transceivers 106 and 206 and/or the one or more antennas 108 and 208 of FIG. 33. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 32), the vehicles (100b-1 and 100b-2 of FIG. 32), the XR device (100c of FIG. 32), the hand-held device (100d of FIG. 32), the home appliance (100e of FIG. 32), the IoT device (100f of FIG. 32), a digital broadcast terminal, a hologram device, a public safety device, an MTC device, a medicine device, a fintech device (or a finance device), a security device, a climate/environment device, the AI server/device (400 of FIG. 32), the BSs (200 of FIG. 32), a network node, etc. The wireless device may be used in a mobile or fixed place according to a use-example/service.

In FIG. 34, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 35 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 35, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 32, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method comprising:
receiving a first signal and a second signal transmitted at a first time from a first anchor and a second anchor;
receiving a third signal and a fourth signal transmitted at a second time from a third anchor and a fourth anchor; and
calculating at least two reception time differences for position measurement of a user equipment (UE) based on the first signal to the fourth signal,
wherein the third anchor and the fourth anchor are virtual anchors obtained by shifting positions of the first anchor and the second anchor by an amount of position change of the UE measured during a time interval between the first time and the second time.

2. The method of claim 1, wherein the UE selects at least three anchors based on a channel state of each of the first anchor, the second anchor, the third anchor, and the fourth anchor or whether each of the first anchor, the second anchor, the third anchor, and the fourth anchor is located in a line-of-sight (LOS) environment, and
wherein the at least two reception time differences are calculated based on signals corresponding to the at least three anchors.

3. The method of claim 1, wherein each of a reception time of the third signal and a reception time of the fourth signal is corrected based on the time interval, and
wherein the at least two reception time differences are calculated based on a reception time of the first signal, a reception time of the second signal, the corrected reception time of the third signal, and the corrected reception time of the fourth signal.

4. The method of claim 1, wherein, based on synchronization error between the first anchor and the second anchor being greater than or equal to a predetermined error threshold, a position of the UE is calculated based only on a reception time difference between the first anchor and the third anchor corresponding to the first anchor and a reception time difference between the second anchor and the fourth anchor corresponding to the second anchor.

5. The method of claim 1, wherein the UE calculates a plurality of reception time differences based on the first signal to the fourth signal, and
wherein the at least two reception time differences are selected from among the plurality of reception time differences based on a channel state of each of the first anchor, the second anchor, the third anchor, and the fourth anchor or whether each of the first anchor, the second anchor, the third anchor, and the fourth anchor is located in a line-of-sight (LOS) environment.

6. The method of claim 1, wherein the first anchor and the second anchor are two anchors selected from among the plurality of anchors based on a channel state at the first time and whether a line-of-sight (LOS) condition is present at the first time.

7. The method of claim 1, further comprising reporting information on the amount of position change to the first anchor or the second anchor for changing a transmission period of the first signal and the second signal.

8. The method of claim 1, wherein the amount of position change is calculated based on an inertial measurement unit (IMU) sensor.

9. A computer-readable recording medium storing a program for executing the method of claim 1.

10. A user equipment (UE) comprising:
a radio frequency (RF) transceiver; and
a processor connected to the RF transceiver,
wherein the processor is configured to:
control the RF transceiver to receive a first signal and a second signal corresponding to a first time from a first anchor and a second anchor;
control the RF transceiver to receive a third signal and a fourth signal corresponding to a second time from a third anchor and a fourth anchor;
calculate at least two reception time differences for position measurement of the UE based on the first signal to the fourth signal, and
wherein the third anchor and the fourth anchor are virtual anchors obtained by shifting positions of the first anchor and the second anchor by an amount of position change of the UE measured during a time interval between the first time and the second time.

11. A processing apparatus configured to control a user equipment (UE), the processing apparatus comprising:
at least one processor; and
at least one memory connected to the at least one processor and storing instructions that, when executed by the at least one processor, cause the UE to:
receive a first signal and a second signal corresponding to a first time from a first anchor and a second anchor,
receive a third signal and a fourth signal corresponding to a second time from a third anchor and a fourth anchor; and
calculate at least two reception time differences for position measurement of the UE based on the first signal to the fourth signal,
wherein the third anchor and the fourth anchor are virtual anchors obtained by shifting positions of the first anchor and the second anchor by an amount of position change of the UE measured during a time interval between the first time and the second time.

12. A method comprising:
measuring, at a first anchor, first reception time information for a first user equipment (UE) signal of a UE transmitted at a first time and a second UE signal of the UE transmitted at a second time;
receiving, from the first UE, information on an amount of position change between the first time and the second time;
receiving, from a second anchor, second reception time information measured at the second anchor for the first UE signal and the second UE signal; and
measuring a position of the UE based on the amount of position change, the first reception time information, and the second reception time information.

13. A computer-readable recording medium storing a program for executing the method of claim 12.

14. A first anchor comprising:
a radio frequency (RF) transceiver; and
a processor connected to the RF transceiver,
wherein the processor is configured to control the RF transceiver to:
measure, at the first anchor, first reception time information for a first UE signal of a UE transmitted at a first time and a second UE signal of the UE transmitted at a second time;
receive, from the UE, information on an amount of position change between the first time and the second time;
receive, from a second anchor, second reception time information measured at the second anchor for the first UE signal and the second UE signal; and
measure a position of the UE based on the amount of position change, the first reception time information, and the second reception time information.

15. A processing apparatus configured to control a first anchor, the processing apparatus comprising:
at least one processor; and
at least one memory connected to the at least one processor and storing instructions that, when executed by the at least one processor, cause the first ancho to:
measure, at the first anchor, first reception time information for a first UE signal of a UE transmitted at a first time and a second UE signal of the UE transmitted at a second time;
receive, from the UE, information on an amount of position change between the first time and the second time;
receive, from a second anchor, second reception time information measured at the second anchor for the first UE signal and the second UE signal; and
measure a position of the UE based on the amount of position change, the first reception time information, and the second reception time information.
